# EUROPEAN PATENT APPLICATION

(11) **EP 4 261 959 A1**
(43) Date of publication of application: **18.10.2023**
(21) Application number: 20964444.2
(22) Date of filing: 10.12.2020
(51) Int. Cl.: H01M 8/04

(54) **FUEL CELL SYSTEM**

(71) Applicant: NISSAN MOTOR CO., LTD., Kanagawa 221-0023 (JP); Renault s.a.s, 92100 Boulogne Billancourt (FR)
(72) Inventor: ISODA, Hiroyuki, Atsugi-shi, Kanagawa 243-0123 (JP); CHIKUGO, Hayato, Atsugi-shi, Kanagawa 243-0123 (JP); USUDA, Masahiro, Atsugi-shi, Kanagawa 243-0123 (JP)
(74) Representative: Grünecker Patent- und Rechtsanwälte PartG mbB
(86) International application number: PCT/IB2020/001061
(87) International publication number: WO 2022/123279

(57) **Abstract**

Provided is a fuel cell system that includes a plurality of fuel cell stacks and an exhaust combustor that combusts exhaust gas. The exhaust combustor is located at least between two fuel cell stacks and adjacent to each of the two fuel cell stacks.

## Description

### TECHNICAL FIELD

The present invention relates to a fuel cell system.

### BACKGROUND ART

JP 2012-221630A discloses a fuel cell system in which fuel cell stacks each obtained by laminating a plurality of fuel cells are laminated in two stages vertically. In this fuel cell system, a combustor is disposed below a fuel cell stack in a lower stage.

### SUMMARY OF INVENTION

In the technique described in JP 2012-221630A, a path for guiding a discharged gas from the fuel cell stack to the combustor is long, and the entire fuel cell system may be increased in size.

The present invention has been made in view of the above problem, and an object of the present invention is to provide a fuel cell system which is reduced in an entire system size.

According to an aspect of this invention, there is provided a fuel cell system that includes a plurality of fuel cell stacks and an exhaust combustor that combusts exhaust gas. The exhaust combustor is located at least between two fuel cell stacks and adjacent to each of the two fuel cell stacks.

### BRIEF DESCRIPTION OF DRAWINGS

[FIG. 1] FIG. 1 is a schematic configuration diagram of a fuel cell system according to a first embodiment of the present invention.
[FIG. 2a] FIG. 2a is a top perspective view of an auxiliary machine body.
[FIG. 2b] FIG. 2b is a bottom perspective view of the auxiliary machine body.
[FIG. 3a] FIG. 3a is a schematic view illustrating gas flow paths inside the auxiliary machine body.
[FIG. 3b] FIG. 3b is a schematic view illustrating the gas flow paths inside the auxiliary machine body.
[FIG. 4] FIG. 4 is a schematic view showing a fuel cell system according to a modification.
[FIG. 5] FIG. 5 is a schematic view showing the fuel cell system according to the modification.
[FIG. 6a] FIG. 6a is a schematic view illustrating gas flow paths inside an auxiliary machine body in a fuel cell system according to a second embodiment.
[FIG. 6b] FIG. 6b is a schematic view illustrating the gas flow paths inside the auxiliary machine body in the fuel cell system according to the second embodiment.
[FIG. 6c] FIG. 6c is a schematic view illustrating the gas flow paths inside the auxiliary machine body in the fuel cell system according to the second embodiment.
[FIG. 6d] FIG. 6d is a schematic view illustrating the gas flow paths inside the auxiliary machine body in the fuel cell system according to the second embodiment.

### DESCRIPTION OF EMBODIMENTS

Hereinafter, embodiments of the present invention will be described with reference to the drawings and the like.

### (First Embodiment)

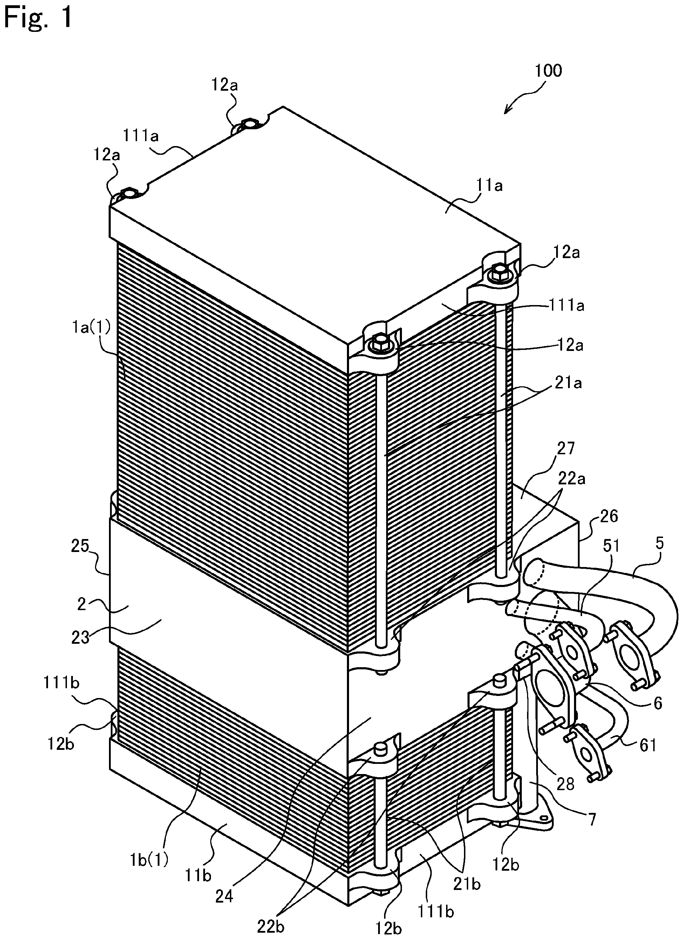

FIG. 1 is a schematic configuration diagram of a fuel cell system 100 according to a first embodiment of the present invention. The fuel cell system 100 is a system that is mounted on a vehicle or the like, supplies a fuel gas (an anode gas) and an oxidant gas (a cathode gas) required for power generation of fuel cell stacks 1 (1a, 1b), and causes the fuel cell stacks 1 to generate power according to an electric load of an electric motor or the like for vehicle traveling.

As shown in FIG. 1, the fuel cell system 100 includes a first fuel cell stack 1a, a second fuel cell stack 1b, an auxiliary machine body 2 in which gas flow paths and an auxiliary machine are incorporated, and the like.

Each of the first and second fuel cell stacks 1a and 1b is formed by laminating a plurality of fuel cells or fuel cell unit cells, and generates power by being supplied with the anode gas and the cathode gas. Each of fuel cells which are power generation sources of the fuel cell stacks 1a and 1b, is, for example, a solid oxide fuel cell (SOFC), and operates at a high temperature.

The first fuel cell stack 1a and the second fuel cell stack 1b are laminated with the auxiliary machine body 2 interposed therebetween. That is, the fuel cell system 100 includes the fuel cell stacks 1 (1a, 1b) laminated in two stages, and the auxiliary machine body 2 is interposed between the laminated first fuel cell stack 1a and second fuel cell stack 1b.

The first fuel cell stack 1a includes an end plate 11a at an upper end thereof, and the second fuel cell stack 1b includes an end plate 11b at a lower end thereof. The end plates 11a and 11b respectively include two flanges 12a and two flanges 12b, each of which is provided with a bolt hole, on each of a pair of facing side surfaces 111a and each of a pair of facing side surfaces 111b. The flanges 12a and 12b are respectively provided at positions facing flanges 22a and 22b which are provided in the auxiliary machine body 2 and will be described later. The flanges 12a provided on the end plate 11a and the flanges 22a provided on the auxiliary machine body 2 are bolted by through bolts 21a that pass through the bolt holes provided in the flanges 12a and the flanges 22a. Accordingly, the first fuel cell stack 1a and the auxiliary machine body 2 are fastened and fixed. Similarly, the flanges 12b provided on the end plate 11b and the flanges 22b provided on the auxiliary machine body 2 are bolted by through bolts 21b that pass through bolt holes provided in the flanges 12b and the flanges 22b, and thus the second fuel cell stack 1b and the auxiliary machine body 2 are fastened and fixed. As shown in FIG. 1, a laminating direction of the plurality of fuel cells or fuel cell unit cells that constitute the first and second fuel cell stacks 1a, 1b and an extending direction of the through bolts 21a, 21b are the same direction.

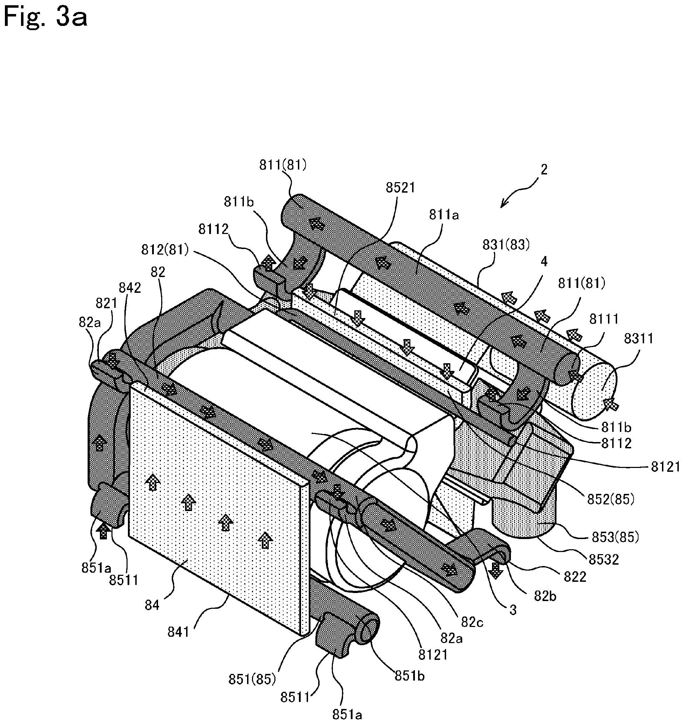

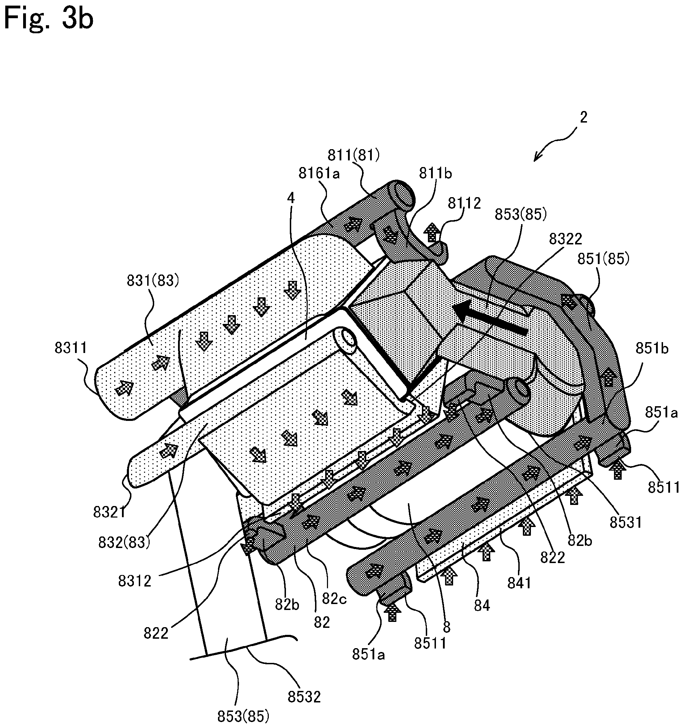

The auxiliary machine body 2 is a substantially rectangular parallelepiped structure having a front surface 23, a first side surface 24 connected to the front surface 23, a second side surface 25 facing the first side surface 24, a rear surface 26 facing the front surface 23, an upper surface 27, and a bottom surface (a lower surface) 28, and is made of a lump of metal or the like. The auxiliary machine body 2 incorporates gas flow paths of the fuel cell system 100, a combustor (a discharged gas combustor) 3 serving as an auxiliary machine, and a heat exchanger 4 (see FIGS. 3a and 3b). The term "incorporate" as used herein includes not only a case in which all of the components are inside the auxiliary machine body 2, but also a case in which some of the components are exposed to the outside of the auxiliary machine body 2 but are fixed to the auxiliary machine body 2. The gas flow paths incorporated in the auxiliary machine body 2 are connected to a fuel supply pipe 5, a combustion fuel supply pipe 51, an air supply pipe 6, and a bypass air supply pipe 61 through the first side surface 24 of the auxiliary machine body 2, and are connected to a discharged gas pipe 7 through the bottom surface 28 of the auxiliary machine body 2. Details of an internal structure of the auxiliary machine body 2 will be described later.

As described above, the auxiliary machine body 2 is interposed between the first fuel cell stack 1a and the second fuel cell stack 1b, the upper surface (a holding surface) 27 is in contact with a bottom surface (a connection surface) of the first fuel cell stack 1a, and the bottom surface (a holding surface) 28 is in contact with an upper surface (a connection surface) of the second fuel cell stack 1b. Accordingly, the first and second fuel cell stacks 1a and 1b are held by the auxiliary machine body 2. In this way, the auxiliary machine body 2 also functions as a base (an end plate) of one end portion of the two fuel cell stacks 1a and 1b.

The auxiliary machine body 2 includes two flanges 22a and two flanges 22b, each of which is provided with a bolt hole, on each of the first side surface 24 and the second side surface 25 facing the first side surface 24. The flanges 22a are provided at upper portions of the side surfaces 24 and 25 of the auxiliary machine body 2, and are formed to face the flanges 12a of the end plate 11a. On the other hand, the flanges 22b are provided at lower portions of the side surfaces 24 and 25 of the auxiliary machine body 2, and are formed to face the flanges 12b of the end plate 11b. As described above, the flanges 12a and the flanges 22a, and the flanges 12b and the flanges 22b are bolted by the through bolts 21a and 21b, respectively, and thus the first and second fuel cell stacks 1a and 1b and the auxiliary machine body 2 are fastened and fixed. That is, the first and second fuel cell stacks 1a and 1b are held by the auxiliary machine body 2 by being in surface contact with the auxiliary machine body 2, and are fastened and fixed to the auxiliary machine body 2 by the through bolts 21a and 21b.

A fastening structure between the fuel cell stacks 1a and 1b and the auxiliary machine body 2 is not limited to the above method, and any known method may be used as long as the fuel cell stacks 1a and 1b can be fixed to the auxiliary machine body 2.

The fuel supply pipe 5, the combustion fuel supply pipe 51, the air supply pipe 6, the bypass air supply pipe 61, and the discharged gas pipe 7 are all pipes (external pipes) outside the auxiliary machine body 2, and are connected to the gas flow paths inside the auxiliary machine body 2 from the outside of the auxiliary machine body 2. The fuel supply pipe 5 is a pipe for supplying, to the gas flow paths inside the auxiliary machine body 2, a fuel gas (an anode gas) to be supplied to the fuel cell stacks 1. The combustion fuel supply pipe 51 is a pipe for supplying, to the gas flow paths inside the auxiliary machine body 2, the fuel gas to be supplied to the combustor 3 when the fuel cell system 100 is started. The air supply pipe 6 and the bypass air supply pipe 61 are pipes for supplying, to the gas flow paths inside the auxiliary machine body 2, air (a cathode gas) to be supplied to the fuel cell stacks 1. The discharged gas pipe 7 is a pipe for discharging an off-gas from the fuel cell stacks 1 to the outside. The fuel supply pipe 5, the combustion fuel supply pipe 51, the air supply pipe 6, and the bypass air supply pipe 61 are connected to the gas flow paths inside the auxiliary machine body 2 through the first side surface 24 of the auxiliary machine body 2, and the discharged gas pipe 7 is connected to the gas flow paths inside the auxiliary machine body 2 through the bottom surface 28 of the auxiliary machine body 2. All the fuel and air to be supplied to the fuel cell stacks 1a and 1b are introduced from the external pipes through the gas flow paths inside the auxiliary machine body 2, and all the off-gas (a discharged gas) discharged from the fuel cell stacks 1a and 1b is discharged to the outside through the gas flow paths inside the auxiliary machine body 2.

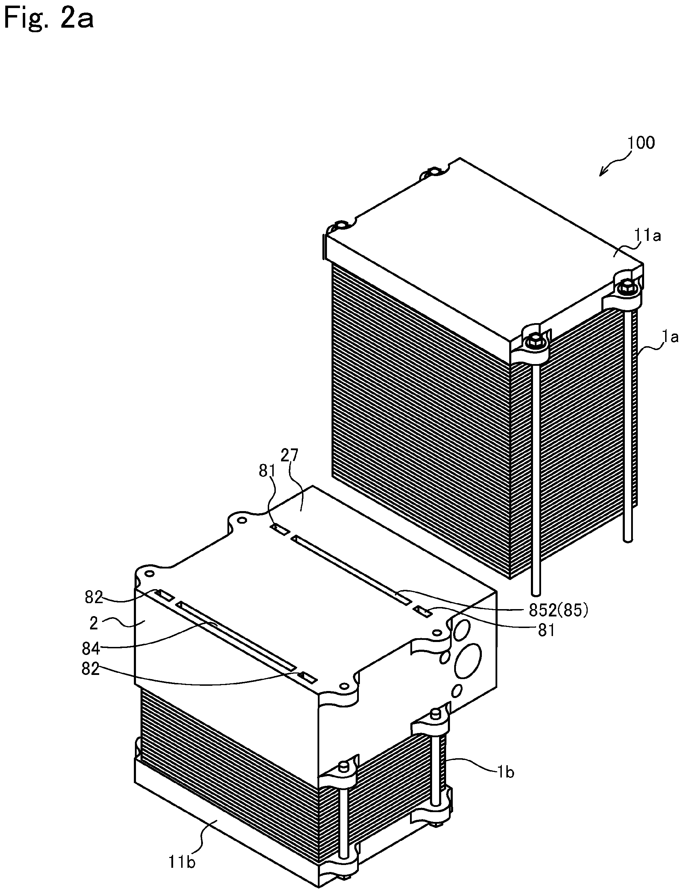

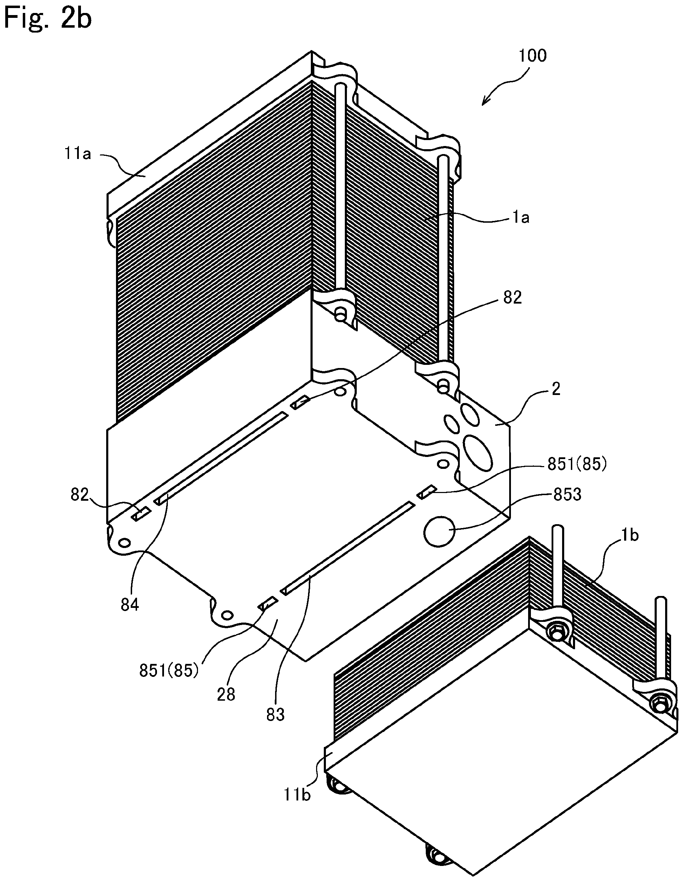

FIG. 2a is a perspective view (a top perspective view of the auxiliary machine body 2) showing a state where the auxiliary machine body 2 and the first fuel cell stack 1a are removed as viewed from a direction of the upper surface 27. FIG. 2b is a perspective view (a bottom perspective view of the auxiliary machine body 2) showing a state where the auxiliary machine body 2 and the second fuel cell stack 1b are removed as viewed from a direction of the bottom surface 28.

The auxiliary machine body 2 incorporates a fuel supply path (an anode gas supply flow path) 81, an anode connection path 82, an air supply path (a cathode gas supply flow path) 83, and a cathode connection path 84. The fuel supply path 81 is a flow path for supplying the fuel gas to the first fuel cell stack 1a, and the anode connection path 82 is a flow path for supplying the fuel gas from the first fuel cell stack 1a to the second fuel cell stack 1b. The air supply path 83 is a flow path for supplying air (the cathode gas) to the second fuel cell stack 1b, and the cathode connection path 84 is a flow path for supplying the cathode gas from the second fuel cell stack 1b to the first fuel cell stack 1a.

As shown in FIGS. 2a and 2b, the fuel supply path 81, the anode connection path 82, the air supply path 83, and the cathode connection path 84 are opened at the upper surface 27 and the bottom surface 28 of the auxiliary machine body 2. The fuel supply path 81, the anode connection path 82, and the cathode connection path 84 are connected to gas flow paths inside the first fuel cell stack 1a through the upper surface 27 of the auxiliary machine body 2 and the bottom surface (the connection surface) of the first fuel cell stack 1a in a state where the auxiliary machine body 2 and the first fuel cell stack 1a are fastened. The anode connection path 82, the air supply path 83, and the cathode connection path 84 are connected to gas flow paths inside the second fuel cell stack 1b through the bottom surface 28 of the auxiliary machine body 2 and the upper surface (the connection surface) of the second fuel cell stack 1b in a state where the auxiliary machine body 2 and the second fuel cell stack 1b are fastened.

The auxiliary machine body 2 incorporates a discharged gas flow path 85, and the discharged gas flow path 85 is opened at the upper surface 27 and the bottom surface 28 of the auxiliary machine body 2. The discharged gas flow path 85 includes an anode off-gas flow path 851 through which an anode off-gas flows, a cathode off-gas flow path 852 through which a cathode off-gas flows, and a combustion gas flow path 853 through which a discharged gas combusted by the combustor 3 flows. The cathode off-gas flow path 852 is connected to a flow path through which the cathode off-gas in the first fuel cell stack 1a flows through the upper surface 27 of the auxiliary machine body 2 and the bottom surface (the connection surface) of the first fuel cell stack 1a in a state where the auxiliary machine body 2 and the first fuel cell stack 1a are fastened. The anode off-gas flow path 851 is connected to a flow path through which the anode off-gas in the second fuel cell stack 1b flows through the bottom surface 28 of the auxiliary machine body 2 and the upper surface (the connection surface) of the second fuel cell stack 1b in a state where the auxiliary machine body 2 and the second fuel cell stack 1b are fastened. The combustion gas flow path 853 is connected to the discharged gas pipe 7 (see FIG. 1) through the bottom surface 28 of the auxiliary machine body 2.

Thus, the fuel supply path 81, the anode connection path 82, the air supply path 83, the cathode connection path 84, and the discharged gas flow path 85 that are incorporated in the auxiliary machine body 2 are connected to the fuel cell stacks 1 through the holding surfaces (the upper surface 27 and the bottom surface 28) of the auxiliary machine body 2 and the connection surfaces of the fuel cell stacks 1. Accordingly, the fuel gas and the air can be supplied to the fuel cell stacks 1 from the pipes outside the auxiliary machine body 2 through the gas flow paths inside the auxiliary machine body 2, and the off-gas from the fuel cell stacks 1 can be discharged to the outside through the gas flow paths inside the auxiliary machine body 2.

Specifically, the fuel gas supplied from the external pipes to the fuel supply path 81 is supplied to the first fuel cell stack 1a through the upper surface 27 of the auxiliary machine body 2, and then supplied from the first fuel cell stack 1a to the anode connection path 82 through the upper surface 27 of the auxiliary machine body 2. The fuel gas (the anode gas) supplied to the anode connection path 82 is supplied to the second fuel cell stack 1b through the bottom surface 28 of the auxiliary machine body 2. The anode gas used in the second fuel cell stack 1b flows as the anode off-gas from the second fuel cell stack 1b into the discharged gas flow path 85 (the anode off-gas flow path 851) through the bottom surface 28 of the auxiliary machine body 2. The anode off-gas flowing into the anode off-gas flow path 851 is supplied from the anode off-gas flow path 851 to the combustor 3 (see FIGS. 3a and 3b). Anode flow paths inside the fuel cell stacks 1 are coated with a reforming catalyst, thereby reforming the fuel gas inside the fuel cell stacks 1.

On the other hand, the air (the cathode gas) supplied from the external pipes to the air supply path 83 is supplied to the second fuel cell stack 1b through the bottom surface 28 of the auxiliary machine body 2, and then supplied from the second fuel cell stack 1b to the cathode connection path 84 through the bottom surface 28 of the auxiliary machine body 2. The air (the cathode gas) supplied to the cathode connection path 84 is supplied to the first fuel cell stack 1a through the upper surface 27 of the auxiliary machine body 2. The cathode gas used in the first fuel cell stack 1a flows as the cathode off-gas into the discharged gas flow path 85 (the cathode off-gas flow path 852) through the upper surface 27 of the auxiliary machine body 2. The cathode off-gas flowing into the cathode off-gas flow path 852 is supplied from the cathode off-gas flow path 852 to the combustor 3 (see FIGS. 3a and 3b).

The anode off-gas and the cathode off-gas supplied to the combustor 3 (see FIGS. 3a and 3b) are mixed and combusted in the combustor 3, and the combusted discharged gas is discharged from the combustion gas flow path 853 to the discharged gas pipe 7 (see FIG. 1) through the bottom surface 28 of the auxiliary machine body 2.

FIGS. 3a and 3b are schematic views illustrating gas flow paths inside the auxiliary machine body 2, and are views showing the auxiliary machine body 2 with an internal configuration thereof removed. FIG. 3a is a top perspective view of the auxiliary machine body 2, and FIG. 3b is a bottom perspective view of the auxiliary machine body 2.

As shown in FIGS. 3a and 3b, the auxiliary machine body 2 incorporates the combustor (the discharged gas combustor) 3, the heat exchanger 4 which server as auxiliary machines, the fuel supply path 81, the anode connection path 82, the air supply path 83, the cathode connection path 84 which server as gas supply flow paths, and the discharged gas flow path 85. The auxiliary machine body 2 is formed by casting a metal or the like into auxiliary machines 3 and 4, the gas supply flow paths 81 to 84, and the discharged gas flow path 85.

The fuel supply path 81 includes a first fuel supply path 811 for supplying the fuel gas, which supplied from the outside through the fuel supply pipe 5, to the first fuel cell stack 1a and a combustion fuel supply path 812 for supplying the fuel gas to the combustor 3 when the fuel cell system 100 is started.

The first fuel supply path 811 is a flow path for supplying, to the first fuel cell stack 1a, the fuel gas supplied from the outside to the auxiliary machine body 2 through the fuel supply pipe 5. The first fuel supply path 811 includes a linear portion 811a and two curved portions 811b branched from the linear portion 811a. One end of the linear portion 811a is an inlet 8111 of the first fuel supply path 811, and is connected to the fuel supply pipe 5 (see FIG. 1) through the first side surface 24 of the auxiliary machine body 2. A portion where the first fuel supply path 811 and the fuel supply pipe 5 are connected is fixed by a flange (not shown) or the like. On the other hand, the other end of the linear portion 811a is closed. The two curved portions 811b are branched from the linear portion 811a near both ends of the linear portion 811a, and extend in a curved shape. An end portion of each curved portion 811b on a side opposite to a side connected to the linear portion 811a is an outlet 8112 of the first fuel supply path 811, and is connected to the first fuel cell stack 1a through the upper surface (the holding surface) 27 of the auxiliary machine body 2. The fuel gas supplied from the outside flows into the first fuel supply path 811 from the inlet 8111, and is supplied from the outlet 8112 to the first fuel cell stack 1a through the linear portion 811a and the curved portions 811b.

The combustion fuel supply path 812 is a flow path for supplying the fuel gas to the combustor 3 when the fuel cell system 100 is started. One end (an inlet) 8121 of the combustion fuel supply path 812 is connected to the combustion fuel supply pipe 51 (see FIG. 1) through the first side surface 24 of the auxiliary machine body 2, and the other end (an outlet) is connected to the combustor 3. When the fuel cell system 100 is started, the fuel gas is supplied from the combustion fuel supply pipe 51 to the combustor 3 through the combustion fuel supply path 812. Accordingly, even when the fuel cell system 100 is started with no anode off-gas supplied into the combustor 3, the fuel is supplied to the combustor 3, and the mixed gas of the air and the fuel is combusted in the combustor 3. That is, the fuel cell system 100 is warmed up.

The anode connection path 82 is a flow path for supplying the fuel gas from the first fuel cell stack 1a to the second fuel cell stack 1b, and connects an anode flow path inside the first fuel cell stack 1a and an anode flow path inside the second fuel cell stack 1b. The anode connection path 82 includes two curved portions 82a connected to the first fuel cell stack 1a, two curved portions 82b connected to the second fuel cell stack 1b, and a connecting portion 82c connecting the curved portions 82a and the curved portions 82b. One end of the curved portion 82a is an inlet 821 of the anode connection path 82, and is connected to the first fuel cell stack 1a through the upper surface 27 of the auxiliary machine body 2. The other end of the curved portion 82a is connected to the connecting portion 82c. One end of the curved portion 82b is an outlet 822 of the anode connection path 82, and is connected to the second fuel cell stack 1b through the bottom surface 28 of the auxiliary machine body 2. The other end of the curved portion 82b is connected to the connecting portion 82c. The connecting portion 82c is formed to connect the curved portions 82a, connect the curved portions 82b, and connect the curved portion 82a and the curved portion 82b. The fuel gas supplied from the first fuel supply path 811 to the first fuel cell stack 1a flows into the curved portion 82a from the inlet 821 of the anode connection path 82, and is supplied to the second fuel cell stack 1b from the outlet 822 of the anode connection path 82 through the connecting portion 82c and the curved portion 82b.

The air supply path 83 is a flow path for supplying the air (the cathode gas) from the outside to the second fuel cell stack 1b, and includes a first air supply path 831 and a second air supply path 832.

The first air supply path 831 is a flow path for supplying the air, which is supplied from the outside to the auxiliary machine body 2 through the air supply pipe 6, to the fuel cell stacks 1 after being subjected to heat exchange (heating) in the heat exchanger 4. One end (an inlet) 8311 of the first air supply path 831 is connected to the air supply pipe 6 (see FIG. 1) through the first side surface 24 of the auxiliary machine body 2, and the other end (an outlet) 8312 is connected to the second fuel cell stack 1b through the bottom surface 28 of the auxiliary machine body 2. A portion where the first air supply path 831 and the air supply pipe 6 are connected is fixed by a flange (not shown) or the like.

The first air supply path 831 is configured to cover an outer periphery of the heat exchanger 4 while being in contact with the heat exchanger 4 at an intermediate portion between the inlet 8311 and the outlet 8312. Accordingly, the air supplied from the outside of the auxiliary machine body 2 flows into the first air supply path 831 from the inlet 8311 of the first air supply path 831, is subjected to heat exchange (heating) in the heat exchanger 4 at the intermediate portion, and is supplied from the outlet 8312 to the second fuel cell stack 1b. The first air supply path 831 is connected to the second air supply path 832, which will be described later, in a vicinity of the outlet 8312.

The second air supply path 832 is a flow path for supplying, to the fuel cell stacks 1, air supplied from the outside through the bypass air supply pipe 61, without being subjected to heat exchange (heating). One end (an inlet) 8321 of the second air supply path 832 is connected to the bypass air supply pipe 61 (see FIG. 1) through the first side surface 24 of the auxiliary machine body 2, and the other end (an outlet) 8322 is connected to a vicinity of the outlet 8312 of the first air supply path 831. A portion where the second air supply path 832 and the bypass air supply pipe 61 are connected is fixed by a flange (not shown) or the like.

In the second air supply path 832, an intermediate portion between the inlet 8321 and the outlet 8322 is not in contact with the heat exchanger 4. Therefore, the air supplied from the bypass air supply pipe 61 flows into the second air supply path 832 from the inlet 8321 of the second air supply path 832, and is supplied to the first air supply path 831 without being subjected to heat exchange (heating). That is, the second fuel cell stack 1b is supplied with air obtained by mixing the air from the second air supply path 832 which is not subjected to heat exchange (heating) and the air inside the first air supply path 831 which is subjected to heat exchange (heating) in the heat exchanger 4. Therefore, a temperature of the air to be supplied to the fuel cell stacks 1 can be adjusted by adjusting an amount of air to be supplied to the bypass air supply pipe 61 by a control unit (not shown) of the fuel cell system 100 outside the auxiliary machine body 2.

The cathode connection path 84 is a flow path for supplying the air from the second fuel cell stack 1b to the first fuel cell stack 1a, and connects a cathode flow path inside the first fuel cell stack 1a and a cathode flow path inside the second fuel cell stack 1b. One end (an inlet) 841 of the cathode connection path 84 is connected to the second fuel cell stack 1b through the bottom surface 28 of the auxiliary machine body 2, and the other end (an outlet) 842 is connected to the first fuel cell stack 1a through the upper surface 27 of the auxiliary machine body 2. The air supplied from the first and second air supply paths 831 and 832 to the second fuel cell stack 1b flows into the cathode connection path 84 from the inlet 841 of the cathode connection path 84, and is supplied from the outlet 842 of the cathode connection path 84 to the first fuel cell stack 1a.

As shown in FIG. 3a, the cathode connection path 84 linearly connects the second fuel cell stack 1b and the first fuel cell stack 1a. Accordingly, a path connecting the second fuel cell stack 1b and the first fuel cell stack 1a can be minimized, space can be saved, and the number of components can be reduced.

The discharged gas flow path 85 includes the anode off-gas flow path 851 for supplying the anode off-gas to the combustor 3, the cathode off-gas flow path 852 for supplying the cathode off-gas to the combustor 3, and the combustion gas flow path 853 for discharging the combustion gas to the discharged gas pipe 7 outside the auxiliary machine body 2. The combustor 3 and the heat exchanger 4 are disposed on the discharged gas flow path 85.

The anode off-gas flow path 851 is a flow path for supplying the anode off-gas from the second fuel cell stack 1b to the combustor 3. The anode off-gas flow path 851 includes two curved portions 851a connected to the second fuel cell stack 1b, and a connecting portion 851b connecting the curved portions 851a and the combustor 3. One end of the curved portion 851a is an inlet 8511 of the anode off-gas flow path 851, and is connected to the second fuel cell stack 1b through the bottom surface 28 of the auxiliary machine body 2. The other end of the curved portion 851a is connected to the connecting portion 851b. One end of the connecting portion 851b is closed, and the other end is an outlet of the anode off-gas flow path 851 that is connected to the combustor 3. The anode off-gas from the second fuel cell stack 1b flows into the anode off-gas flow path 851 from the inlet 8511 of the anode off-gas flow path 851, and is supplied from the outlet of the anode off-gas flow path 851 to the combustor 3 through the curved portions 851a and the connecting portion 851b.

The cathode off-gas flow path 852 is a flow path for supplying the cathode off-gas from the first fuel cell stack 1a to the combustor 3. One end (an inlet) 8521 of the cathode off-gas flow path 852 is connected to the first fuel cell stack 1a through the upper surface 27 of the auxiliary machine body 2, and the other end (an outlet) is connected to the combustor 3. The cathode off-gas from the first fuel cell stack 1a flows into the cathode off-gas flow path 852 from the inlet 8521 of the cathode off-gas flow path 852, and is supplied from the outlet of the cathode off-gas flow path 852 to the combustor 3.

The combustor (the discharged gas combustor) 3 is an auxiliary machine that combusts the discharged gas from the fuel cell stacks 1. The combustor 3 is connected to the anode off-gas flow path 851, the cathode off-gas flow path 852, and the combustion gas flow path 853. The combustor 3 is supplied with the anode off-gas and the cathode off-gas from the anode off-gas flow path 851 and the cathode off-gas flow path 852, respectively. The anode off-gas and the cathode off-gas supplied to the combustor 3 are combusted in the combustor 3 to generate a high-temperature combustion gas. The combustion gas flows into the combustion gas flow path 853.

The combustion gas flow path 853 is a flow path for discharging the combustion gas generated in the combustor 3 to the outside after the combustion gas is subjected to heat exchange in the heat exchanger 4. One end (an inlet) 8531 of the combustion gas flow path 853 is connected to the combustor 3, and the other end (an outlet) 8532 is connected to the discharged gas pipe 7 (see FIG. 1) through the bottom surface 28 of the auxiliary machine body 2. A portion where the combustion gas flow path 853 and the discharged gas pipe 7 are connected is fixed by a flange (not shown) or the like.

In the combustion gas flow path 853, the heat exchanger 4 is disposed between the inlet 8531 and the outlet 8532. The heat exchanger 4 heats the air supplied to the fuel cell stacks 1 by exchanging heat between the discharged gas (the combustion gas) of the fuel cell stacks 1 combusted by the combustor 3 and the air inside the air supply path 83 (the first air supply path 831). The discharged gas (the combustion gas) combusted in the combustor 3 is supplied to the heat exchanger 4 through the combustion gas flow path 853, and is subjected to heat exchange with the air inside the air supply path 83 (the first air supply path 831). The discharged gas subjected to heat exchange in the heat exchanger 4 is discharged to the discharged gas pipe 7 through the combustion gas flow path 853, and is discharged through the discharged gas pipe 7 to the outside of the vehicle or the like on which the fuel cell system 100 is mounted.

The anode connection path 82 and the cathode connection path 84 are disposed at positions close to the front surface 23 (see FIG. 1), which is one side surface of the auxiliary machine body 2, and the combustor 3 and the heat exchanger 4 are disposed at central positions of the auxiliary machine body 2. In this way, by disposing the anode connection path 82 and the cathode connection path 84 unevenly in the positions close to one side surface (the front surface 23) of the auxiliary machine body 2, a volume for storing auxiliary machines in the auxiliary machine body 2 can be easily secured.

As described above, in the present embodiment, the gas flow paths connected to the fuel cell stacks 1, the combustor 3, and the heat exchanger 4 are incorporated in the auxiliary machine body 2, which is interposed between the first fuel cell stack 1a and the second fuel cell stack 1b.

When the discharged gas combustor is disposed at a position adjacent to only one of the two laminated fuel cell stacks, or when the discharged gas combustor is disposed at a position not adjacent to any of the fuel cell stacks, a path for guiding the discharged gas from the fuel cell stack to the discharged gas combustor is lengthened, and the entire fuel cell system may be increased in size. When a distance between the fuel cell stack and the discharged gas combustor is long, it takes time for the off-gas to reach the discharged gas combustor, which may delay temperature rise of the fuel cell system. On the other hand, in the present embodiment, the combustor 3 is incorporated in the auxiliary machine body 2 which is disposed between the two laminated fuel cell stacks 1a and 1b and at a position adjacent to each of the two fuel cell stacks 1a and 1b. Therefore, as compared with a case where the combustor 3 is disposed at a position different from that in the auxiliary machine body 2, a flow path for guiding an off-gas from the fuel cell stacks 1 to the combustor 3 can be shortened, the fuel cell system 100 can be reduced in size, and the temperature rise thereof can be accelerated.

Since the combustor 3 is disposed between the two laminated fuel cell stacks 1a and 1b and at a position adjacent to each of the two fuel cell stacks 1a and 1b, a temperature of the combustor 3 is unlikely to decrease and the temperature of the combustor 3 can be maintained.

Similarly, since the heat exchanger 4 is also incorporated in the auxiliary machine body 2, it is possible to shorten a flow path for guiding the air (the cathode gas) after the temperature rise to the fuel cell stacks 1, as compared with a case where the heat exchanger 4 is disposed at a position different from that in the auxiliary machine body 2. Accordingly, the fuel cell system 100 can be reduced in size.

Since the gas flow paths, the combustor 3, and the heat exchanger 4 are incorporated in the auxiliary machine body 2 and integrated, the number of components and the number of assembly steps of the entire fuel cell system 100 can be reduced.

The combustor 3, the heat exchanger 4, and the gas flow paths incorporated in the auxiliary machine body 2 are not limited to the configuration described above. As long as the gas flow paths connect the pipes outside the auxiliary machine body 2 and the fuel cell stacks 1, a layout of the gas flow paths in the auxiliary machine body 2 may be set in any manner. It is preferable that the fuel supply path 81, the anode connection path 82, the air supply path 83, and the cathode connection path 84 are disposed at positions close to the front surface 23 or the rear surface 26 of the auxiliary machine body 2, and the combustor 3 and the heat exchanger 4 are disposed at the central positions of the auxiliary machine body 2, but the present invention is not necessarily limited thereto. The auxiliary machines and the gas flow paths in the auxiliary machine body 2 may be disposed in any manner.

In the present embodiment, the combustor 3, the heat exchanger 4, and the gas flow paths are incorporated in the auxiliary machine body 2 by casting a metal or the like, but the present invention is not necessarily limited thereto, and the combustor 3, the heat exchanger 4, and the gas flow paths may be incorporated in the auxiliary machine body 2 by any known method.

According to the fuel cell system 100 in the first embodiment described above, the following effects can be obtained.

The fuel cell system 100 includes the two fuel cell stacks 1a and 1b, and the combustor (the discharged gas combustor) 3 is disposed between the two fuel cell stacks 1a and 1b and at a position adjacent to each of the two fuel cell stacks 1a and 1b. Therefore, as compared with a case where the combustor 3 is disposed at a position different from the above position, the flow path for guiding the off-gas from the fuel cell stacks 1 to the combustor 3 can be shortened. Accordingly, the entire fuel cell system 100 can be reduced in size and the number of components, and space saving and cost reduction can be realized. Since the flow path for guiding the off-gas from the fuel cell stacks 1 to the combustor 3 is shortened and the off-gas is combusted early, the temperature rise of the fuel cell system 100 can be accelerated.

Since the combustor (the discharged gas combustor) 3 is disposed between the two fuel cell stacks 1a and 1b and at a position adjacent to each of the two fuel cell stacks 1a and 1b, the temperature of the combustor (the discharged gas combustor) 3 is unlikely to decrease. That is, the temperature of the combustor (the discharged gas combustor) 3 can be maintained.

Since the combustor (the discharged gas combustor) 3, which is a high-temperature component, is disposed between the two fuel cell stacks 1a and 1b and at a position adjacent to each of the two fuel cell stacks 1a and 1b, the heat of the combustor (the discharged gas combustor) 3 rises the temperatures of the fuel cell stacks 1a and 1b. That is, the temperatures of the fuel cell stacks 1a and 1b can rise earlier.

In the fuel cell system 100, the heat exchanger 4 is disposed between the two fuel cell stacks 1a and 1b and at a position adjacent to each of the two fuel cell stacks 1a and 1b. Therefore, as compared with a case where the heat exchanger 4 is disposed at a position different from the above position, the flow path for guiding the air (the cathode gas) after the temperature rise to the fuel cell stacks 1 can be shortened. Accordingly, the entire fuel cell system 100 can be reduced in size and the number of components, and space saving and cost reduction can be realized. It is possible to prevent the temperature decrease before the air (the cathode gas) after the temperature rise reaches the fuel cell stacks 1.

Since the heat exchanger 4 is disposed between the two fuel cell stacks 1a and 1b and at a position adjacent to each of the two fuel cell stacks 1a and 1b, a temperature of the heat exchanger 4 is unlikely to decrease. That is, the temperature of the heat exchanger 4 can be maintained.

Since the heat exchanger 4, which is a high-temperature component, is disposed between the two fuel cell stacks 1a and 1b and at a position adjacent to each of the two fuel cell stacks 1a and 1b, the heat of the heat exchanger 4 rises the temperatures of the fuel cell stacks 1a and 1b. That is, the temperatures of the fuel cell stacks 1a and 1b can rise earlier.

The fuel cell system 100 includes the auxiliary machine body 2 disposed between the two fuel cell stacks 1a and 1b. The auxiliary machine body 2 incorporates the combustor (the discharged gas combustor) 3, the heat exchanger 4, the gas supply flow paths 81 to 84 for supplying the air and the fuel to the fuel cell stacks 1, and the discharged gas flow path 85 for discharging the discharged gas from the fuel cell stacks 1 to the outside. In this way, since the gas flow paths, the combustor 3, and the heat exchanger 4 are incorporated in the auxiliary machine body 2 and integrated, the entire fuel cell system 100 can be reduced in size, and the number of components and the number of assembly steps can be reduced. That is, the space saving and the cost reduction of the fuel cell system 100 can be realized.

In the fuel cell system 100, all the air and fuel to be supplied to the two fuel cell stacks 1a and 1b are introduced through the gas supply flow paths 81 to 84 of the auxiliary machine body 2, and all the discharged gas discharged from the two fuel cell stacks 1a and 1b is discharged to the outside through the discharged gas flow path 85 of the auxiliary machine body 2. As described above, since the air, the fuel, and the discharged gas are all introduced or discharged through the flow paths inside the auxiliary machine body 2, the entire fuel cell system 100 can be reduced in size, and the number of components and the number of assembly steps can be reduced as compared with a case where the flow paths for the air, the fuel, and the discharged gas are provided at different positions. That is, the space saving and the cost reduction of the fuel cell system 100 can be realized.

The fuel cell system 100 includes the auxiliary machine body 2 disposed between the two fuel cell stacks 1a and 1b, and the auxiliary machine body 2 has the holding surfaces 27 and 28 that hold the fuel cell stacks 1a and 1b. The fuel cell stacks 1a and 1b have connection surfaces that are in contact with the holding surfaces 27 and 28, and are held by the auxiliary machine body 2 by contact between the connection surfaces and the holding surfaces 27 and 28. In this way, the auxiliary machine body 2 functions as a base (an end plate) for holding the two fuel cell stacks 1a and 1b. Therefore, since the number of necessary end plates can be reduced, the number of manufacturing steps of the fuel cell system 100 can be reduced, and the fuel cell system 100 can be reduced in size, weight, and cost.

In the fuel cell system 100, the fuel supply path (the anode gas supply flow path) 81, the air supply path (the cathode gas supply flow path) 83, and the discharged gas flow path (the anode off-gas flow path and the cathode off-gas flow path) 85 are connected to the fuel cell stacks 1a and 1b through the holding surfaces 27 and 28 of the auxiliary machine body 2 and the connection surfaces of the fuel cell stacks 1a and 1b. That is, the gas flow paths are connected to the fuel cell stacks 1 through a portion where the auxiliary machine body 2 and the fuel cell stacks 1 are in surface contact with each other. Accordingly, as compared with a case where the gas flow paths are connected to the fuel cell stacks 1 without passing through the portion (for example, a case where the gas flow paths are connected to the fuel cell stacks 1 from the outside of the auxiliary machine body 2), the gas can be exchanged between the two fuel cell stacks 1a and 1b over a shorter distance. Therefore, the temperature decrease or the like of the gas due to the long flow path can be prevented, the performance of the fuel cell system 100 can be improved, the number of components can be reduced, and the cost can be reduced.

In the fuel cell system 100, the anode connection path 82 and the cathode connection path 84 are disposed at positions close to one side surface of the auxiliary machine body 2, and the combustor (the discharged gas combustor) 3 and the heat exchanger 4 are disposed at the central positions of the auxiliary machine body 2. In this way, by disposing the anode connection path 82 and the cathode connection path 84 unevenly at the positions close to one side surface of the auxiliary machine body 2, a volume for storing auxiliary machines 3 and 4 in the auxiliary machine body 2 can be easily secured.

In the present embodiment, the combustor 3 and the heat exchanger 4 are incorporated in the auxiliary machine body 2 and the combustor 3 and the heat exchanger 4 are disposed between the two fuel cell stacks 1a and 1b and at positions adjacent to each of the two fuel cell stacks 1a and 1b, but the present invention is not necessarily limited thereto. That is, as long as the combustor 3 and the heat exchanger 4 are disposed between the two fuel cell stacks 1a and 1b and at positions adjacent to each of the two fuel cell stacks 1a and 1b, it is not always necessary to use the auxiliary machine body 2.

It is preferable that both the combustor 3 and the heat exchanger 4 are disposed between the two fuel cell stacks 1a and 1b and at positions adjacent to each of the two fuel cell stacks 1a and 1b, but the present invention is not necessarily limited thereto. For example, only the combustor 3 may be disposed at the position.

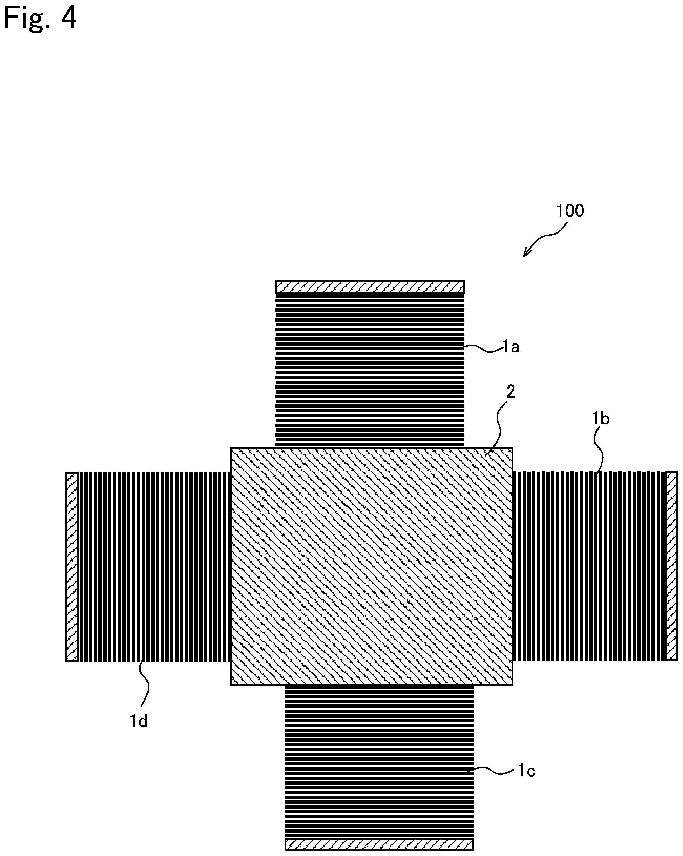

In the present embodiment, the fuel cell system 100 includes the two fuel cell stacks 1a and 1b, but the number of the fuel cell stacks 1 is not limited to two, and three or more fuel cell stacks 1 may be provided. For example, as shown in FIG. 4, the combustor 3 may be incorporated in the auxiliary machine body 2 disposed at the center of four fuel cell stacks 1a to 1d.

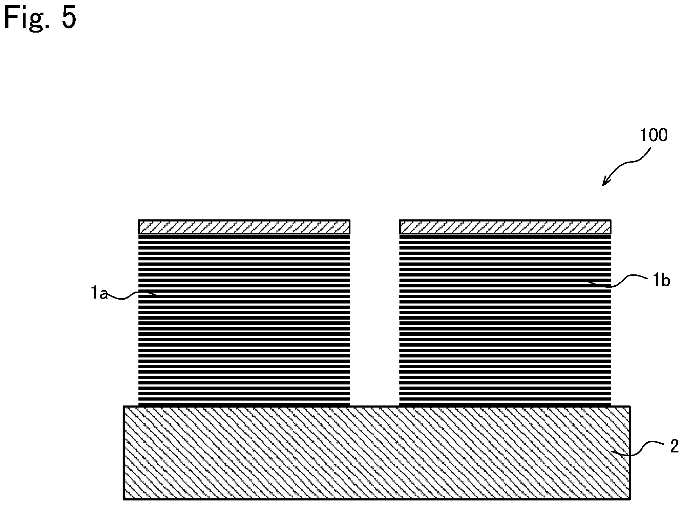

In the present embodiment, the first fuel cell stack 1a and the second fuel cell stack 1b are laminated with the auxiliary machine body 2 interposed therebetween, but the first fuel cell stack 1a and the second fuel cell stack 1b does not necessarily need to be laminated. For example, as shown in FIG. 5, a plurality of fuel cell stacks 1 (1a, 1b) may be held on the upper surface 27 of the auxiliary machine body 2 in which the combustor 3 is incorporated.

In the present embodiment, the combustor 3 and the heat exchanger 4 as the auxiliary machines are incorporated in the auxiliary machine body 2, but the auxiliary machines incorporated in the auxiliary machine body 2 are not limited thereto. For example, a reformer or the like may be incorporated in the auxiliary machine body 2. In the present embodiment, the fuel gas is reformed in the fuel cell stacks 1, but in this case, the fuel gas is reformed by the reformer.

From the viewpoint of reducing the size of the fuel cell system 100 and the like, it is preferable that the gas flow paths and the auxiliary machines (the combustor 3 and the heat exchanger 4) be formed integrally, but the present invention is not necessarily limited thereto, and the gas flow paths and the auxiliary machines may be provided as separate bodies.

In the present embodiment, the heat exchanger 4 is configured to exchange heat with the discharged gas (the combustion gas) of the fuel cell stacks 1 combusted by the combustor 3 and the air inside the air supply path 83, but the present invention is not necessarily limited thereto. For example, the fuel supply path 81 may be disposed adjacent to the heat exchanger 4, and the heat exchanger 4 may be configured to exchange heat between the combustion gas and the fuel inside the fuel supply path 81. That is, the heat exchanger 4 may be configured to exchange heat using the combustion gas combusted by the combustor 3 and at least one of the air and the fuel to be supplied to the fuel cell stacks 1.

It is preferable that each of the fuel supply path 81, the air supply path 83, the anode off-gas flow path 851, and the cathode off-gas flow path 852 is connected to the fuel cell stacks 1 through the holding surfaces 27 and 28 of the auxiliary machine body 2 and the connection surfaces of the fuel cell stacks 1, but the present invention is not necessarily limited thereto. That is, at least one of the fuel supply path 81, the air supply path 83, the anode off-gas flow path 851, and the cathode off-gas flow path 852 may be connected to the fuel cell stacks 1 through the holding surfaces 27 and 28 of the auxiliary machine body 2 and the connection surfaces of the fuel cell stacks 1.

In the present embodiment, the cathode connection path 84 is configured to linearly connect the fuel cell stacks 1a and 1b, and similarly, the anode connection path 82 may also be configured to linearly connect the fuel cell stacks 1a and 1b. Accordingly, for the anode, a path connecting the first fuel cell stack 1a and the second fuel cell stack 1b can also be minimized, the space can also be saved, and the number of components can also be reduced. It is preferable that both the anode connection path 82 and the cathode connection path 84 are configured linearly, but only the cathode connection path 84 or only the anode connection path 82 may be configured linearly as in the present embodiment.

In the present embodiment, the fuel supply pipe 5, the combustion fuel supply pipe 51, the air supply pipe 6, the bypass air supply pipe 61, and the discharged gas pipe 7 are the external pipes connected to the gas flow paths inside the auxiliary machine body 2, but the external pipes are not limited thereto. For example, as the external pipes connected to the gas flow paths inside the auxiliary machine body 2, a POX pipe for supplying oxygen to the fuel gas may be provided, and a POX flow path connected to the POX pipe may be incorporated in the auxiliary machine body 2.

### (Second Embodiment)

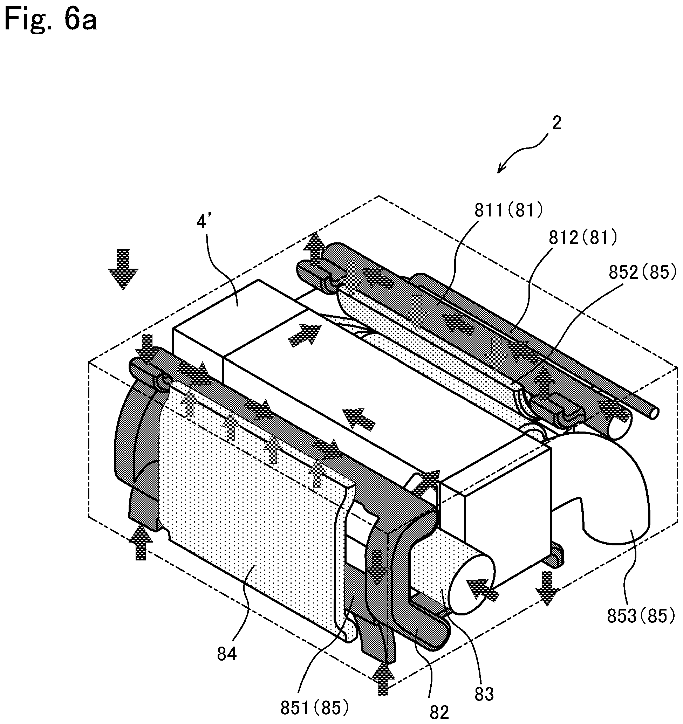

The fuel cell system 100 according to a second embodiment will be described with reference to FIGS. 6a to 6d. The present embodiment is different from the first embodiment in that a combustor-integrated heat exchanger 4' is used. The same elements as those in the first embodiment are denoted by the same reference numerals, and the description thereof will be omitted.

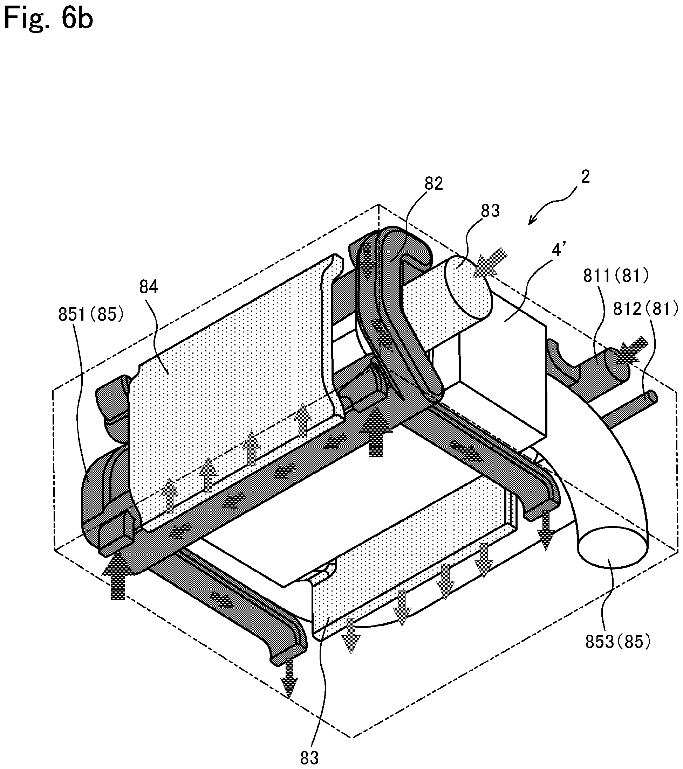

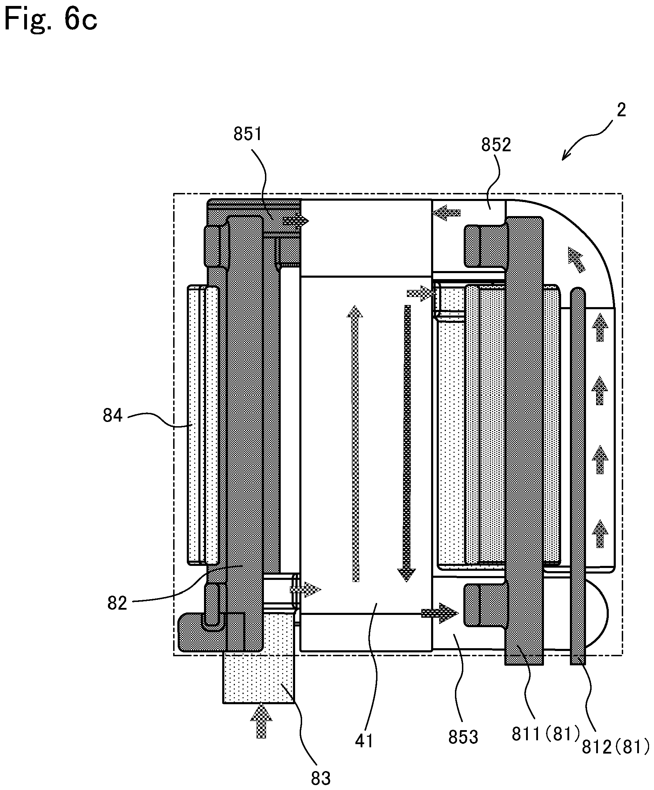

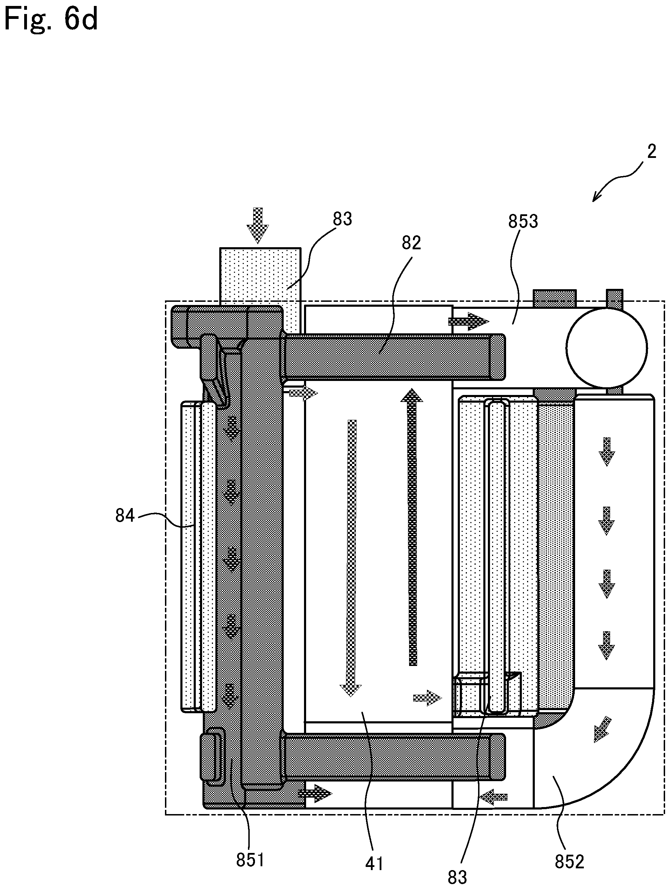

FIGS. 6a to 6d are all schematic views illustrating the gas flow paths inside the auxiliary machine body in the fuel cell system according to the second embodiment, and are views showing an state where an internal configuration of the auxiliary machine body 2 is removed. FIG. 6a is a top perspective view of the auxiliary machine body 2, FIG. 6b is a bottom perspective view of the auxiliary machine body 2, FIG. 6c is a top view of the auxiliary machine body 2, and FIG. 6d is a bottom view of the auxiliary machine body 2.

As shown in FIGS. 6a to 6d, the auxiliary machine body 2 incorporates the combustor-integrated heat exchanger 4', the fuel supply path 81, the anode connection path 82, the air supply path 83, the cathode connection path 84, and the discharged gas flow path 85.

The fuel supply path 81 includes the first fuel supply path 811 for supplying the fuel gas, which is supplied from the outside to the auxiliary machine body 2 through the fuel supply pipe 5, to the first fuel cell stack 1a, and the combustion fuel supply path 812 for supplying the fuel gas to the combustor-integrated heat exchanger 4' when the fuel cell system 100 is started.

The anode connection path 82 connects the anode flow path inside the first fuel cell stack 1a and the anode flow path inside the second fuel cell stack 1b, and the cathode connection path 84 connects the cathode flow path inside the first fuel cell stack 1a and the cathode flow path inside the second fuel cell stack 1b.

The air supply path 83 is a flow path for supplying the air (the cathode gas), which is supplied from the outside to the auxiliary machine body 2 through the air supply pipe 6, to the second fuel cell stack 1b. One end of the air supply path 83 is an inlet through which the air flows from the outside, and the other end is an outlet connected to the second fuel cell stack 1b. A flow path of the air supply path 83 between the inlet and the outlet passes through the combustor-integrated heat exchanger 4'.

The discharged gas flow path 85 includes the anode off-gas flow path 851, the cathode off-gas flow path 852, and the combustion gas flow path 853. The anode off-gas flow path 851 connects the second fuel cell stack 1b and the combustor-integrated heat exchanger 4', and the cathode off-gas flow path 852 connects the first fuel cell stack 1a and the combustor-integrated heat exchanger 4'. One end of the combustion gas flow path 853 is connected to the combustor-integrated heat exchanger 4', and the other end is connected to the discharged gas pipe 7 (see FIG. 1) through the bottom surface 28 of the auxiliary machine body 2.

The fuel gas supplied from the outside through the fuel supply pipe 5 is supplied to the first fuel cell stack 1a through the first fuel supply path 811, and then flows into the anode connection path 82 from the first fuel cell stack 1a. The fuel gas (the anode gas) flowing into the anode connection path 82 is supplied from the anode connection path 82 to the second fuel cell stack 1b, and is discharged from the second fuel cell stack 1b to the anode off-gas flow path 851 as the anode off-gas. The anode off-gas discharged to the anode off-gas flow path 851 is supplied from the anode off-gas flow path 851 to the combustor-integrated heat exchanger 4'.

On the other hand, the air (the cathode gas) supplied from the outside to the air supply path 83 through the air supply pipe 6 passes through the combustor-integrated heat exchanger 4', and is supplied from the air supply path 83 to the second fuel cell stack 1b. The air (the cathode gas) supplied to the second fuel cell stack 1b flows into the cathode connection path 84 from the second fuel cell stack 1b. The air (the cathode gas) flowing into the cathode connection path 84 is supplied from the cathode connection path 84 to the first fuel cell stack 1a, and is discharged from the first fuel cell stack 1a to the cathode off-gas flow path 852 as the cathode off-gas. The cathode off-gas discharged to the cathode off-gas flow path 852 is supplied from the cathode off-gas flow path 852 to the combustor-integrated heat exchanger 4'.

The combustor-integrated heat exchanger 4' is an auxiliary machine in which a heat exchanger is integrated with a discharged gas combustor, and is formed by laminating plates. The combustor-integrated heat exchanger 4' includes a flow path connected to the air supply path 83, and a flow path connected to the anode off-gas flow path 851, the cathode off-gas flow path 852, and the combustion gas flow path 853.

As shown in FIGS. 6a to 6d, the anode off-gas and the cathode off-gas are supplied to the combustor-integrated heat exchanger 4' from the anode off-gas flow path 851 and the cathode off-gas flow path 852, respectively, and the anode off-gas and the cathode off-gas are mixed in the combustor-integrated heat exchanger 4'. A mixed gas including the anode off-gas and the cathode off-gas is combusted in the combustor-integrated heat exchanger 4', and the combustion gas is discharged to the combustion gas flow path 853. The combustion gas discharged to the combustion gas flow path 853 is discharged to the outside from the discharged gas pipe 7, which is connected to the combustion gas flow path 853, through the bottom surface 28 of the auxiliary machine body 2. The flow paths in the combustor-integrated heat exchanger 4' to which the anode off-gas flow path 851 and the cathode off-gas flow path 852 are connected are coated with a combustion catalyst, thereby promoting combustion of the mixed gas.

The air (cathode gas) supplied to the air supply path 83 is supplied to the combustor-integrated heat exchanger 4', and is subjected to heat exchange with the combustion gas generated in the combustor-integrated heat exchanger 4'. Accordingly, the air (the cathode gas) to be supplied to the fuel cell stacks 1 is heated. The air (the cathode gas) heated in the combustor-integrated heat exchanger 4' is supplied to the air supply path 83 again, and is supplied from the air supply path 83 to the second fuel cell stack 1b.

As shown in FIGS. 6c and 6d, a flow direction of the air (the cathode gas) inside the combustor-integrated heat exchanger 4' is opposite to a flow direction of the mixed gas including the anode off-gas and the cathode off-gas. That is, the interior of the combustor-integrated heat exchanger 4' has a counter-flow plate laminated structure in which off-gas flow paths are coated with the combustion catalyst.

As described above, in the present embodiment, the combustor-integrated heat exchanger 4' in which a combustor and a heat exchanger are integrated is used, and the combustor directly raises the temperature of the heat exchanger inside the combustor-integrated heat exchanger 4'. Accordingly, a path from the combustor to the heat exchanger is unnecessary, or the path can be shortened.

According to the fuel cell system 100 in the second embodiment described above, the following effects can be obtained in addition to the effects in the first embodiment.

The fuel cell system 100 includes the combustor-integrated heat exchanger 4' in which the combustor (the discharged gas combustor) and the heat exchanger are integrally formed. Accordingly, since the combustor directly raises the temperature of the heat exchanger inside the combustor-integrated heat exchanger 4', a path from the combustor to the heat exchanger is unnecessary, or the path can be shortened. Therefore, cost reduction and space saving can be realized by reducing the number of components and the number of assembly steps. Since the combustor directly raises the temperature of the heat exchanger, a heat exchange efficiency is improved.

In the present embodiment, the combustor-integrated heat exchanger 4' has the counter-flow plate laminated structure in which the off-gas flow paths are coated with the combustion catalyst, but a structure of the combustor-integrated heat exchanger 4' is not necessarily limited thereto as long as the combustor and the heat exchanger are integrated, and any known structure may be used.

In the present embodiment, the combustor-integrated heat exchanger 4' is incorporated in the auxiliary machine body 2, but the present invention is not necessarily limited thereto. That is, as long as the combustor-integrated heat exchanger 4' is disposed between the two fuel cell stacks 1a and 1b and at a position adjacent to each of the two fuel cell stacks 1a and 1b, it is not always necessary to use the auxiliary machine body 2.

In the present embodiment, the fuel supply pipe 5, the combustion fuel supply pipe 51, the air supply pipe 6, and the discharged gas pipe 7 are the external pipes connected to the gas flow paths inside the auxiliary machine body 2, but the external pipes are not limited thereto. For example, a bypass air supply pipe 61 may be provided as in the first embodiment. Alternatively, a POX pipe may be provided, and a POX flow path connected to the POX pipe may be incorporated in the auxiliary machine body 2.

Although the embodiments of the present invention are described above, the above embodiments are merely a part of application examples of the present invention, and do not mean that the technical scope of the present invention is limited to the specific configurations of the above embodiments.

## Claims

1. A fuel cell system, comprising:
a plurality of fuel cell stacks; and
a discharged gas combustor configured to combust a discharged gas from the fuel cell stacks, wherein
the discharged gas combustor is disposed between at least two of the fuel cell stacks and at a position adjacent to each of the two fuel cell stacks.

2. The fuel cell system according to claim 1, further comprising:
a heat exchanger configured to exchange heat using a combustion gas combusted by the discharged gas combustor and at least one of air and fuel supplied to the fuel cell stacks, wherein
the heat exchanger is disposed between at least two of the fuel cell stacks and at a position adjacent to each of the two fuel cell stacks.

3. The fuel cell system according to claim 2, wherein
the discharged gas combustor and the heat exchanger are integrally formed.

4. The fuel cell system according to claim 1, further comprising:
an auxiliary machine body disposed between at least two of the fuel cell stacks, wherein
the auxiliary machine body incorporates the discharged gas combustor, a gas supply flow path for supplying air and fuel to the fuel cell stacks, and a discharged gas flow path for discharging the discharged gas from the fuel cell stacks to an outside, and
the gas supply flow path and the discharged gas flow path are connected to the fuel cell stacks from the auxiliary machine body.

5. The fuel cell system according to claim 4, wherein
all the air and fuel supplied to at least two of the fuel cell stacks are supplied through the gas supply flow path, and
all the discharged gas discharged from at least two of the fuel cell stacks are discharged to the outside through the discharged gas flow path.

6. The fuel cell system according to claim 2 or 3, further comprising:
an auxiliary machine body disposed between at least two of the fuel cell stacks, wherein
the auxiliary machine body incorporates the discharged gas combustor, the heat exchanger, a gas supply flow path for supplying air and fuel to the fuel cell stacks, and a discharged gas flow path for discharging the discharged gas from the fuel cell stacks to the outside, and
the gas supply flow path and the discharged gas flow path are connected to the fuel cell stacks from the auxiliary machine body.

7. The fuel cell system according to any one of claims 4 to 6, wherein
the auxiliary machine body has holding surfaces for holding the fuel cell stacks, and
each of the fuel cell stacks has a connection surfaces in contact with the holding surfaces of the auxiliary machine body, and is held by the auxiliary machine body by contact between the connection surfaces and the holding surfaces.

8. The fuel cell system according to claim 7, wherein
the gas supply flow path includes an anode gas supply flow path for supplying an anode gas to the fuel cell stacks and a cathode gas supply flow path for supplying a cathode gas to the fuel cell stacks,
the discharged gas flow path includes an anode off-gas flow path for supplying an anode off-gas from the fuel cell stacks to the discharged gas combustor and a cathode off-gas flow path for supplying a cathode off-gas from the fuel cell stacks to the discharged gas combustor, and
at least one of the anode gas supply flow path, the cathode gas supply flow path, the anode off-gas flow path, and the cathode off-gas flow path is connected to the fuel cell stacks through the holding surfaces and the connection surfaces.

9. The fuel cell system according to claim 8, wherein
the holding surfaces of the auxiliary machine body includes an upper surface and a lower surface of the auxiliary machine body,
the plurality of fuel cell stacks include at least a first fuel cell stack in which the connection surface is in contact with the upper surface of the auxiliary machine body, and a second fuel cell stack in which the connection surface is in contact with the lower surface of the auxiliary machine body, and
the auxiliary machine body incorporates an anode connection path that linearly connects an anode flow path in the first fuel cell stack and an anode flow path in the second fuel cell stack.

10. The fuel cell system according to claim 9, wherein
the anode connection path is disposed at a position closer to one of side surfaces of the auxiliary machine body, and
the discharged gas combustor is disposed at a central position of the auxiliary machine body.

11. The fuel cell system according to claim 10, wherein
the auxiliary machine body further incorporates a cathode connection path that linearly connects a cathode flow path in the first fuel cell stack and a cathode flow path in the second fuel cell stack, and
the cathode connection path is disposed at a position closer to one of the side surfaces of the auxiliary machine body.
